# EUROPÄISCHE PATENTANMELDUNG

(11) **EP 3 064 860 A2**
(43) Veröffentlichungstag der Anmeldung: **07.09.2016**
(21) Anmeldenummer: 16150789.2
(22) Anmeldetag: 11.01.2016
(51) Int. Cl.: F24J 2/05, F24J 2/52, F24J 2/46

(54) **VAKUUMRÖHRENKOLLEKTORMODUL SOWIE VERFAHREN ZUM MONTIEREN WENIGSTENS EINER VAKUUMRÖHRE**

(30) Priorität: 04.03.2015 DE 102015203828
(71) Anmelder: ROBERT BOSCH GMBH, 70442 Stuttgart (DE)
(72) Erfinder: Otting, Herbert, 49832 Beesten (DE); Stockmeier, Holger, 48493 Wettringen (DE)

(57) **Zusammenfassung**

Die Erfindung betrifft ein Vakuumröhrenkollektormodul (0) für eine Vakuumröhrenkollektoranlage, mit wenigstens einer Vakuumröhre (10) und einem Halter (22) zum Lagern der wenigstens einen Vakuumröhre (10), wobei die Vakuumröhre (10) am/im Halter (22) gelagert ist, wobei zwischen der Vakuumröhre (10) und dem Halter (22) eine Röhrenfixierung (30) vorgesehen ist, welche die Vakuumröhre (10) am/im Halter (22) lagert.

Ferner betrifft die Erfindung ein Verfahren zum Montieren wenigstens einer Vakuumröhre (10) an/in einem Halter (22) eines Vakuumröhrenkollektormoduls (0) für eine Vakuumröhrenkollektoranlage, wobei eine Röhrenfixierung (30) für die Vakuumröhre (10) zunächst in eine Steckposition am/im Halter (22) verbracht wird, wobei mittels der Röhrenfixierung (30) ein Endabschnitt der Vakuumröhre (10) an/in der Röhrenfixierung (30) aufgenommen wird, und die Röhrenfixierung (30) aus der Steckposition in eine Montageposition der Röhrenfixierung (30) am/im Halter (22) verbracht wird, in welcher die Röhrenfixierung (30) am/im Halter (22) festgelegt wird.

## Beschreibung

Die Erfindung betrifft ein Vakuumröhrenkollektormodul für eine Vakuumröhrenkollektoranlage, mit wenigstens einer Vakuumröhre und einem Halter zum Lagern der wenigstens einen Vakuumröhre. Ferner betrifft die Erfindung ein Verfahren zum Montieren wenigstens einer Vakuumröhre an/in einem Halter bevorzugt eines Vakuumröhrenkollektormoduls für eine Vakuumröhrenkollektoranlage. Des Weiteren betrifft die Erfindung einen Vakuumröhrenkollektor, eine Vakuumröhrenkollektoranlage oder ein Thermosystem zur Wärmeerzeugung, z. B. für eine Warmwasserbereitung und/oder eine Heizungsunterstützung.

### Stand der Technik

Angesichts steigender Preise für fossile Energieträger und einer schwindenden Akzeptanz der Atomenergie kommt einer Nutzung regenerativer Energien in Zukunft eine wachsende Bedeutung zu. So nutzt eine thermische (Solar-)Kollektoranlage, wie z. B. eine Vakuumröhrenkollektoranlage, die Sonnenenergie zur Wärmeerzeugung, z. B. für eine Warmwasserbereitung und wahlweise auch zur Heizungsunterstützung, wobei solche Anlagen energiesparend und umweltschonend sind. Dies spart wertvolle Brennstoffe ein und schont die Umwelt durch weniger Schadstoffemissionen. In einer Vakuumröhrenkollektoranlage wird nicht nur die direkte Sonnenstrahlung in Wärme umgesetzt, sondern auch die diffuse Sonnenstrahlung kann durch deren Kollektormodule genutzt werden. So wirken an trüben Tagen mit einem hohen Anteil an diffusem Licht noch bis zu 300 W/m² auf einen Kollektor bzw. ein Kollektormodul der Vakuumröhrenkollektoranlage.

Eine Warmwasserbereitung ist eine naheliegende Anwendung für eine solche Anlage. Ein über das gesamte Jahr hinweg im Wesentlichen konstanter Warmwasserbedarf ist gut mit einem solaren Energieangebot kombinierbar. Im Sommer lässt sich der Energiebedarf für die Warmwasserbereitung nahezu vollständig von der Vakuumröhrenkollektoranlage abdecken. Ferner kann eine solche Anlage auch für eine Heizungsunterstützung angewendet werden. Allerdings kann die Anlage hierfür nur dann Wärme abgeben, wenn eine Rücklauftemperatur einer Heizung niedriger ist als eine Temperatur der Vakuumröhrenkollektoranlage. Ideal hierfür sind deshalb großflächige Heizkörper mit niedrigen Systemtemperaturen oder Fußbodenheizungen. Bei entsprechender Auslegung deckt die Vakuumröhrenkollektoranlage einen nicht geringen Anteil der benötigten Gesamt-Jahreswärmeenergie für eine Warmwasserbereitung und eine Heizung ab.

Im Mittelpunkt einer jeden Vakuumröhrenkollektoranlage steht neben einem Speicher- oder Puffersystem ein Vakuumröhrenkollektor bzw. dessen Kollektormodule. Dieser nimmt bzw. diese nehmen die einfallende Sonnenenergie durch Absorber auf und wandelt bzw. wandeln die Energie in Wärme um. Eine die Leitrohre in den Absorbern durchströmende Wärmeträgerflüssigkeit, meist ein Gemisch aus Wasser und einem Frostschutzmittel, erhitzt sich dabei und transportiert die Wärme hydraulisch über Sammelrohre z. B. zu einem Wärmetauscher, einem Speicher und/oder einem Verbraucher. Bei direkt durchströmbaren Vakuumröhrenkollektormodulen fließt die Wärmeträgerflüssigkeit durch jede einzelne Vakuumröhre, wobei die Vakuumröhren und die Sammelrohre der meisten Vakuumröhrenkollektoranlagen oben an den Vakuumröhrenkollektormodulen montiert sind.

Bei anderen hydraulischen/mechanischen Konzepten sind die Vakuumröhren und die hydraulischen Sammelrohre der Vakuumröhrenkollektoranlagen unten an den Vakuumröhrenkollektormodulen montiert. Problematisch ist hierbei eine Aufnahme der axialen Kräfte der Vakuumröhren, da die Vakuumröhren am Ende der Sammelrohre offen sind. Durch eine solche Art der Konstruktion haben die Vakuumröhren einen direkten Kontakt zu einem Trägerblech aus Metall. Dies kann zu Spannungsspitzen in einer Vakuumröhre und schließlich zum Bruch der Glasröhre führen. Zusätzlich können die Leitrohre der Vakuumröhren einen mechanischen Kontakt zum Trägerblech bekommen, was wiederum zu Wärmeverlusten führt (Wärmebrücken).

### Aufgabenstellung

Es ist eine Aufgabe der Erfindung, eine verbesserte Vakuumröhrenhalterung für ein Vakuumröhrenkollektormodul bzw. ein verbessertes Vakuumröhrenkollektormodul anzugeben. Hierbei soll eine mechanische, thermische und/oder hydraulische Anbindung einer Vakuumröhre am/im Vakuumröhrenkollektormodul verbessert sein. Ferner soll ein Verfahren zum Montieren wenigstens einer Vakuumröhre an/in einem Halter eines Vakuumröhrenkollektormoduls angegeben werden. Des Weiteren ist es eine Aufgabe der Erfindung, einen verbesserten Vakuumröhrenkollektor, eine verbesserte Vakuumröhrenkollektoranlage und ein verbessertes Thermosystem anzugeben.

### Offenbarung der Erfindung

Die Aufgabe der Erfindung ist mittels eines Vakuumröhrenkollektormoduls für eine Vakuumröhrenkollektoranlage, mit wenigstens einer Vakuumröhre und einem Halter zum Lagern der wenigstens einen Vakuumröhre, gemäß Anspruch 1; durch ein Verfahren zum Montieren wenigstens einer Vakuumröhre an/in einem Halter bevorzugt eines Vakuumröhrenkollektormoduls für eine Vakuumröhrenkollektoranlage, gemäß Anspruch 10; und mittels eines Vakuumröhrenkollektors, einer Vakuumröhrenkollektoranlage oder eines Thermosystems zur Wärmeerzeugung, z. B. für eine Warmwasserbereitung und/oder eine Heizungsunterstützung, gemäß Anspruch 13 gelöst. - Vorteilhafte Weiterbildungen, zusätzliche Merkmale und/oder Vorteile der Erfindung ergeben sich aus den abhängigen Ansprüchen und der folgenden Beschreibung.

Das erfindungsgemäße Vakuumröhrenkollektormodul bzw. die erfindungsgemäße Vakuumröhrenhalterung umfasst wenigstens eine Vakuumröhre und einen Halter, wobei die Vakuumröhre am/im Halter gelagert ist und zwischen der Vakuumröhre und dem Halter eine Röhrenfixierung und ggf. eine Dichtung vorgesehen ist, welche die Vakuumröhre am/im Halter lagert. Die Vakuumröhre kann im Wesentlichen mittels einer axialen Loslagerung an/in einer Ausnehmung des Halters gelagert sein, wobei die Vakuumröhre bevorzugt durch die Ausnehmung hindurchgesteckt ist, oder die Vakuumröhre bevorzugt an/in der Ausnehmung aufgenommen ist. D. h., dass die Vakuumröhre analog in der Röhrenfixierung ebenfalls im Wesentlichen mittels einer axialen (Axialrichtung der betreffenden Vakuumröhre) Loslagerung gelagert sein kann, wobei die Röhrenfixierung für die Vakuumröhre einen inneren Anschlag aufweisen kann. Ferner kann die Röhrenfixierung analog zur Vakuumröhre durch die Ausnehmung hindurchgesteckt sein, oder die Röhrenfixierung kann analog zur Vakuumröhre an/in der Ausnehmung aufgenommen sein.

Ein Sammelkasten und/oder wenigstens ein Sammelrohr bzw. ein Gehäuse des Vakuumröhrenkollektormoduls kann an einer Unterseite des Vakuumröhrenkollektormoduls vorgesehen sein. - In der Röhrenfixierung kann eine Dichtung, insbesondere zusammen mit der Vakuumröhre bzw. einem Längsendabschnitt der Vakuumröhre, vorgesehen sein, mittels welcher die Vakuumröhre gegenüber dem Halter im Wesentlichen thermisch und/oder gegen Wasser isolierbar oder isoliert ist. Hierbei ist es möglich, zunächst die Vakuumröhre zusammen mit der Dichtung am/im Halter und erst dann die Röhrenfixierung, insbesondere in Bezug auf den Halter von einer anderen Seite, als die Vakuumröhre kommend, vorzusehen. Zusätzlich oder alternativ zur Dichtung kann die Röhrenfixierung einen Isolierbereich aufweisen, mittels welchem die Vakuumröhre gegenüber dem Halter im Wesentlichen thermisch isolierbar oder isoliert ist.

Die Röhrenfixierung kann ferner einen Montageabschnitt aufweisen, mittels welchem die Röhrenfixierung am Halter fixierbar und somit die Vakuumröhre am/im Halter lagerbar oder gelagert ist. Die Röhrenfixierung kann darüber hinaus einen Kodierabschnitt oder eine Kodiereinrichtung aufweisen, welcher bzw. welche lediglich bei ordnungsgemäßer Montage der Röhrenfixierung ein Schließen eines Deckels des Vakuumröhrenkollektormoduls ermöglicht. Zwischen dem Montageabschnitt und dem Kodierabschnitt kann ein Übergangsabschnitt in der Röhrenfixierung eingerichtet sein. Des Weiteren kann die Röhrenfixierung insbesondere am/im Kodierabschnitt einen Montagebereich aufweisen, an/in welchem ein Sammelrohrhalter montierbar oder montiert ist.

Für eine oder bei einer Montage der Röhrenfixierung am/im Vakuumröhrenkollektormodul bzw. an/in der Vakuumröhrenhalterung kann die Röhrenfixierung zunächst an/in eine Steckposition an/in der Ausnehmung am/im Halter auf der Vakuumröhre verbringbar sein oder verbracht werden. In der Steckposition kann die Dichtung mit der darin befindlichen Vakuumröhre oder die Vakuumröhre selbst in der Röhrenfixierung aufnehmbar sein oder aufgenommen werden. In einem zeitlichen Anschluss daran kann die Röhrenfixierung aus der Steckposition in eine Vormontageposition verbringbar sein oder verbracht werden. In der Vormontageposition kann der Sammelrohrhalter an/in der Röhrenfixierung vorsehbar sein oder vorgesehen werden. Ferner kann in der Vormontageposition ggf. wenigstens ein Sammelrohr am/im Sammelrohrhalter montierbar, insbesondere verrastbar, sein oder montiert, insbesondere verrastet, werden. In einem zeitlichen Anschluss daran kann die Röhrenfixierung aus der Vormontageposition in eine Montageposition verbringbar sein oder verbracht werden. Ggf. in einem zeitlichen Anschluss daran kann wenigstes ein Sammelrohr am/im Sammelrohrhalter montierbar, insbesondere verrastbar, sein oder montiert, insbesondere verrastet, werden.

Der Montageabschnitt kann eine Montageeinrichtung für eine Montage, insbesondere eine schrittweise Montage, der Röhrenfixierung am/im Halter aufweisen, wobei die Montageeinrichtung am/im Halter festlegbar ist, und die Montageeinrichtung insbesondere derart ausgestaltet ist, dass die Montageeinrichtung an/in einer Hinterschneidung des Halters arretierbar ist. Der Montageabschnitt kann eine erste Montagevorrichtung für die Vormontageposition der Röhrenfixierung am/im Halter und eine zweite Montagevorrichtung für die Montageposition der Röhrenfixierung am/im Halter aufweisen. Die erste Montagevorrichtung ist bevorzugt federnd in der Montageeinrichtung eingerichtet. Hierbei kann wenigstens einer der zwei, insbesondere beide, Umfangsendabschnitte der ersten Montagevorrichtung als Federn, bevorzugt als Blattfedern, einer Federvorrichtung der Montageeinrichtung ausgebildet sein.

Die erste Montagevorrichtung kann als ein Montageanschlag der Röhrenfixierung und/oder die zweite Montagevorrichtung kann als eine Verdrehsicherung der Röhrenfixierung ausgebildet sein. Hierbei kann, bevorzugt durch eine Drehung, insbesondere eine im Wesentlichen 45°- oder 90°-Drehung, zeitlich zunächst der Montageanschlag und in einem zeitlichen Anschluss daran, bevorzugt durch eine weitere Drehung, insbesondere eine im Wesentlichen 45°- oder 90°-Drehung, die Verdrehsicherung in Eingriff mit der Hinterschneidung des Halters bringbar sein oder gebracht sein/werden. Die Verdrehsicherung kann z. B. mittels einer an ihr ausgebildeten Fläche an einer Fläche in der Hinterschneidung des Halters eng oder komplementär anlegbar sein oder anliegen.

Der Sammelrohrhalter ist bevorzugt mittels eines Bajonettverschlusses an/in der Röhrenfixierung montierbar, wobei für ein Einrichten des Bajonettverschlusses bevorzugt der Sammelrohrhalter festhalterbar ist oder festgehalten wird, und die Röhrenfixierung diesbezüglich (also gegenüber dem Sammelrohrhalter und somit auch dem Halter) verdrehbar ist oder verdreht wird. Bei einem Bajonettverschluss werden der Sammelrohrhalter und die Röhrenfixierung durch Ineinanderstecken und entgegengesetztes Relativdrehen verbunden und ggf. dergestalt auch wieder voneinander getrennt. Der Sammelrohrhalter weist bevorzugt eine Verdrehsicherung auf, mittels welcher der Sammelrohrhalter an einem Leitrohr der Vakuumröhre halterbar ist oder gehalten wird. Ferner weist der Sammelrohrhalter für das Einrichten des Bajonettverschlusses bevorzugt eine Arretierlasche auf, welche in eine Hinterschneidung der Röhrenfixierung eingreifbar ist oder eingreift.

Gemäß der Erfindung kann die Ausnehmung als eine Durchgangsausnehmung im oder eine Randausnehmung am Halter ausgebildet sein. Ferner kann das Vakuumröhrenkollektormodul eine Vielzahl von Vakuumröhren mit einer Vielzahl von Röhrenfixierungen aufweisen. Die Röhrenfixierung kann als eine UniversalRöhrenfixierung ausgebildet sein, mittels welcher im Wesentlichen sämtliche Vakuumröhren des Kollektormoduls lagerbar oder gelagert sind. Hierbei kann lediglich ein Anteil der Röhrenfixierungen des Vakuumröhrenkollektormoduls einen Sammelrohrhalter umfassen. Röhrenfixierungen ohne einen Sammelrohrhalter können z. B. eine Blende ggf. mit Durchführung(en) im Montagebereich für den Sammelrohrhalter aufweisen. Der Sammelrohrhalter kann eine Klammer oder eine Registerklammer zur Halterung wenigstens eines Sammelrohrs aufweisen.

Die erste Montagevorrichtung, die Federeinrichtung und/oder die zweite Montagevorrichtung der Montageeinrichtung können stofflich einstückig oder integral ausgebildet sein. Des Weiteren kann die Montageeinrichtung stofflich einstückig oder integral mit dem Montageabschnitt ausgebildet sein. Ferner können der Isolierbereich, der Montageabschnitt, der Übergangsabschnitt und/oder der Kodierabschnitt der Röhrenfixierung stofflich einstückig oder integral ausgebildet sein. D. h. die gesamte Röhrenfixierung kann stofflich einstückig oder integral ausgebildet sein. - Falls die Dichtung in der Röhrenfixierung vorsehbar ist, so kann die Dichtung separat von der Röhrenfixierung ausgebildet sein, wobei die Dichtung bevorzugt aus einem Gummi hergestellt ist.

Der Kodierabschnitt bzw. die Kodiereinrichtung können derart ausgebildet sein, dass ein Deckel bzw. eine Blende des Sammelkastens nur dann vollständig schließbar oder geschlossen ist, wenn die Röhrenfixierung korrekt montiert ist. D. h. die Röhrenfixierung bzw. eine Kodiereinrichtung ggf. des Kodierabschnitts kann derart ausgebildet sein, dass der Deckel nur dann vollständig schließbar ist, wenn die Röhrenfixierung in ihrer Montageposition ist. Sollte sich die Röhrenfixierung nicht in ihrer Montageposition befinden, so ist der Deckel über einem ggf. montierten Sammelrohr bzw. einer Vakuumröhrenhalterung nicht vollständig schließbar. Dies kann sämtliche Röhrenfixierungen bzw. Vakuumröhrenhalterungen betreffen; d. h. befindet sich z. B. lediglich eine einzige Röhrenfixierung nicht in ihrer Montageposition und alle anderen Röhrenfixierungen sind korrekt montiert, so ist der Deckel derart ausgebildet, dass er trotzdem nicht vollständig schließbar ist. - Hierfür weist der Deckel eine Kodiereinrichtung auf, welche mit der Röhrenfixierung bzw. der Kodiereinrichtung mechanisch entsprechend zusammenwirkt (Hemmung, keine korrekte Montage der/einer Röhrenfixierung) bzw. nicht zusammenwirkt (korrekte Montage der/einer Röhrenfixierung).

Bei dem erfindungsgemäßen Verfahren zum Montieren wenigstens einer Vakuumröhre an/in einem Halter wird zunächst eine Röhrenfixierung für die Vakuumröhre in eine Steckposition am/im Halter bevorzugt auf der Vakuumröhre verbracht, wobei mittels der Röhrenfixierung ein Endabschnitt der Vakuumröhre an/in der Röhrenfixierung aufgenommen wird. In einem zeitlichen Anschluss daran kann die Röhrenfixierung aus der Steckposition in eine Montageposition der Röhrenfixierung am/im Halter verbracht werden, durch welche die Röhrenfixierung am/im Halter festgelegt wird. D. h. die Röhrenfixierung ist dann durch sich und den Halter an diesem festgelegt bzw. montiert. Zeitlich vor dem Vorsehen der Röhrenfixierung am/im Halter bzw. auf der Vakuumröhre kann die Vakuumröhre zusammen mit einer auf ihr vorgesehenen Dichtung am/im Halter vorgesehen werden. - Bevorzugt wird die Vakuumröhre dabei im Wesentlichen mittels einer axialen Loslagerung an/in einer Ausnehmung der Röhrenfixierung gelagert.

Die Röhrenfixierung kann ferner aus der Steckposition in eine Vormontageposition am/im Halter verbracht werden. In der Vormontageposition kann ein Sammelrohrhalter an/in der Röhrenfixierung vorgesehen werden, und ggf. ein Sammelrohr am/im Sammelrohrhalter montiert, insbesondere verrastet, werden. Des Weiteren kann die Röhrenfixierung aus der Vormontageposition in die Montageposition verbracht werden, und ggf. ein Sammelrohr am/im Sammelrohrhalter montiert, insbesondere verrastet, werden. Die Röhrenfixierung kann durch ein Verdrehen, insbesondere ein Verdrehen von im Wesentlichen 90° oder 180°, aus der Steckposition in die Montageposition verbracht werden. Ferner kann die Röhrenfixierung durch ein Verdrehen, insbesondere ein Verdrehen von im Wesentlichen 45° oder 90°, aus der Steckposition in die Vormontageposition verbracht werden. Darüber hinaus kann die Röhrenfixierung durch ein Verdrehen, insbesondere ein Verdrehen von im Wesentlichen 45° oder 90°, aus der Vormontageposition in die Montageposition verbracht werden.

Beim Verbringen oder Verdrehen der Röhrenfixierung in die Vormontageposition und/oder die Montageposition kann eine Montageeinrichtung der Röhrenfixierung in den Halter eingreifen, wobei die Montageeinrichtung z. B. in eine Hinterschneidung des Halters ggf. sukzessive eingreifen kann. In der Montageposition kann eine Außenfläche der Montageeinrichtung in einen flächigen Angriff mit einer Fläche des Halters gebracht werden (Verdrehsicherung). - Hierbei kann die Röhrenfixierung und/oder das Vakuumröhrenkollektormodul wie eine erfindungsgemäße Röhrenfixierung bzw. ein erfindungsgemäßes Vakuumröhrenkollektormodul ausgebildet sein. - Ferner kann der erfindungsgemäße Vakuumröhrenkollektor, die erfindungsgemäße Vakuumröhrenkollektoranlage oder das erfindungsgemäße Thermosystem ein erfindungsgemäßes Vakuumröhrenkollektormodul aufweisen, und/oder eine Vakuumröhre des erfindungsgemäßen Vakuumröhrenkollektors, der erfindungsgemäßen Vakuumröhrenkollektoranlage oder des erfindungsgemäßen Thermosystems kann gemäß der Erfindung montiert sein oder montiert werden.

### Kurzbeschreibung der Zeichnung

Die Erfindung ist im Folgenden anhand von Ausführungsbeispielen zweier Ausführungsformen der Erfindung unter Bezugnahme auf die beigefügte nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in den Figuren der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu den dargestellten Ausführungsformen und/oder den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:

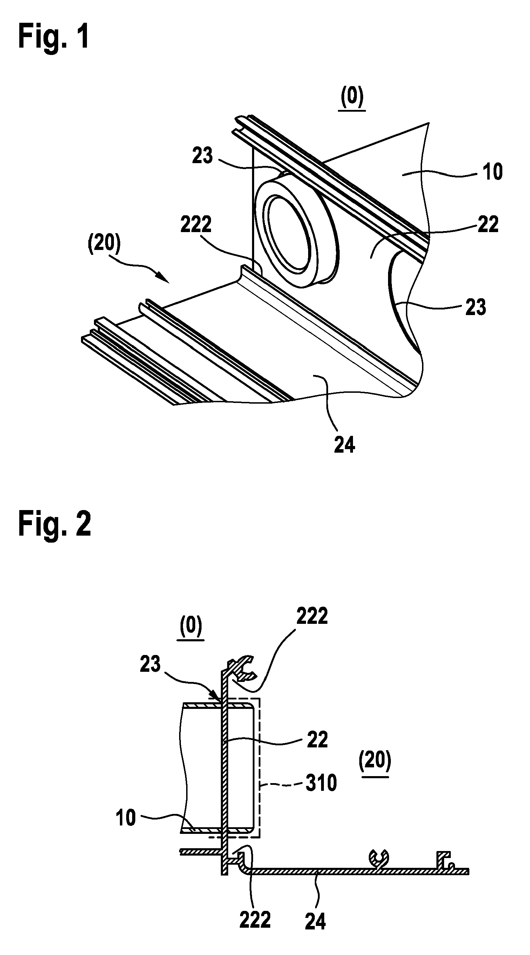

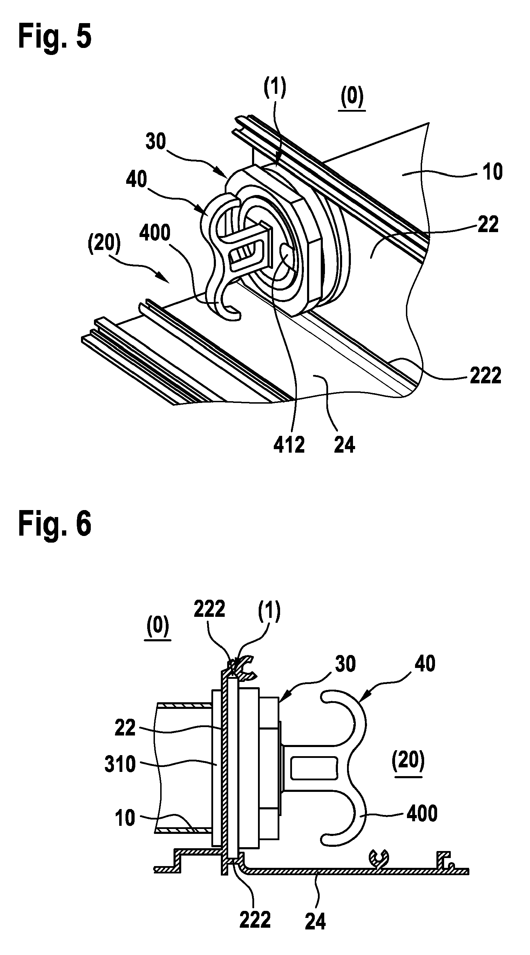

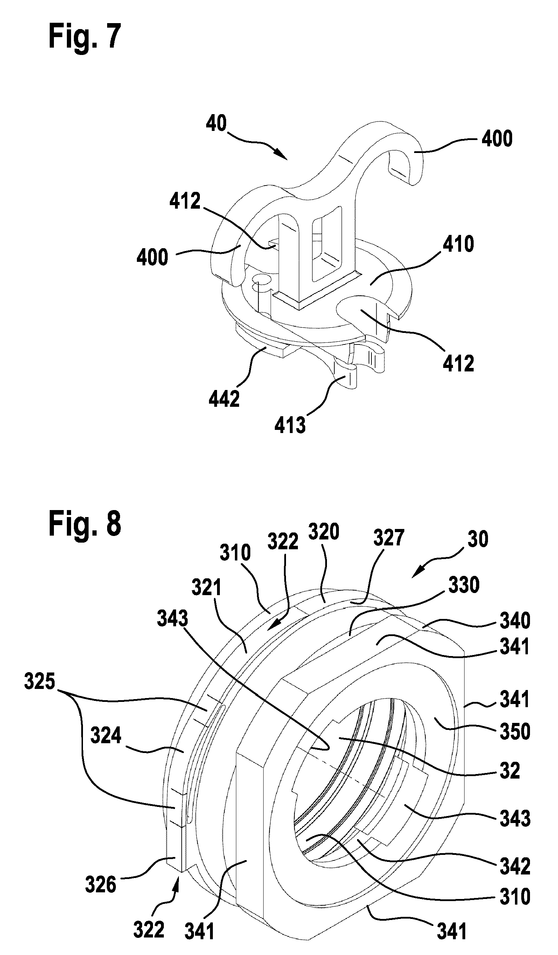

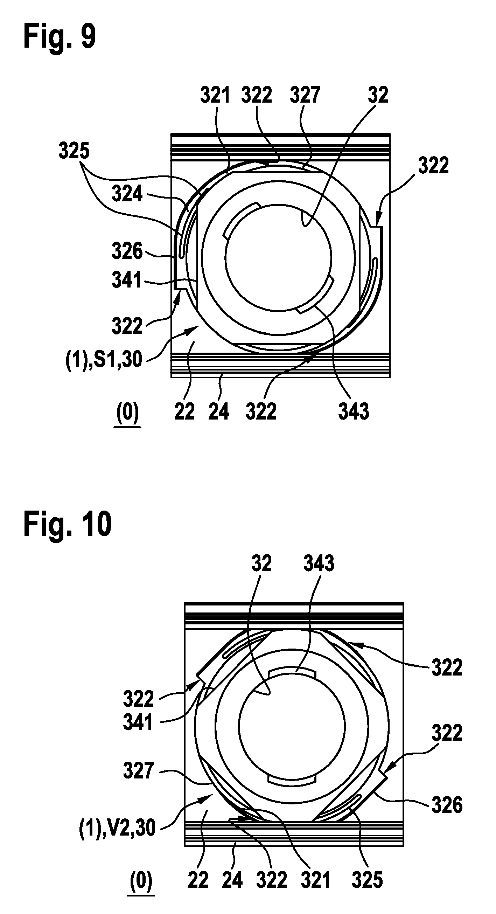

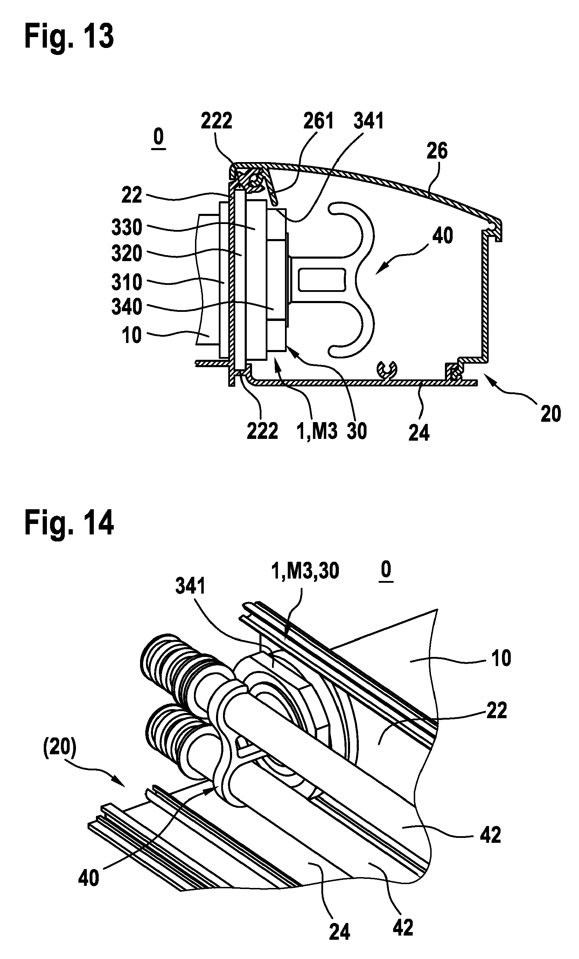

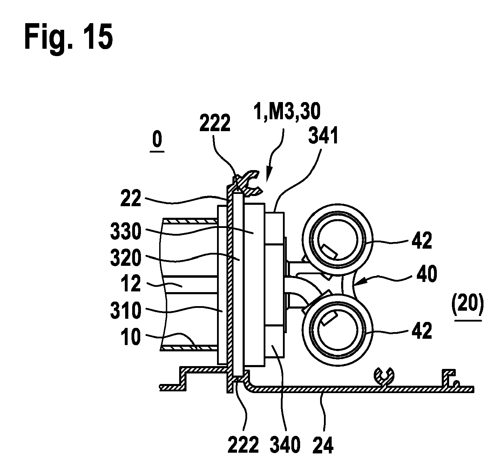

Die Fig. 1 bis 6 in weggebrochenen Perspektiv- und jeweilig betreffenden zweidimensionalen Seitenansichten, in vereinfachten Schritten eine erfindungsgemäße Montage einer Vakuumröhre an/in einem erfindungsgemäßen Vakuumröhrenkollektormodul, mittels einer erfindungsgemäßen Röhrenfixierung an/in einem Halter des Vakuumröhrenkollektormoduls. Die Fig. 7 und 8 detaillierte Perspektivansichten eines erfindungsgemäßen Sammelrohrhalters (Fig. 7) und der erfindungsgemäßen Röhrenfixierung (Fig. 8). Die Fig. 9 bis 12 in allseitig weggebrochenen Stirnseitenansichten ein Verriegeln einer Vakuumröhre am/im Halter mittels einer erfindungsgemäßen Röhrenfixierung. Die Fig. 13 eine röhrenseitig weggebrochene, zweidimensionale seitliche Schnittansicht auf einen geschlossenen Sammelkasten eines erfindungsgemäßen Vakuumröhrenkollektormoduls. Und die Fig. 14 und 15 in einer weggebrochenen Perspektiv- und einer betreffenden zweidimensionalen Seitenansicht ein vollständig montiertes Vakuumröhrenkollektormodul mit offenem Sammelkasten.

### Ausführungsformen der Erfindung

Die Erfindung ist im Folgenden anhand von Ausführungsbeispielen zweier Ausführungsformen einer Variante einer Röhrenfixierung 30 einer Vakuumröhrenhalterung 1 eines Vakuumröhrenkollektormoduls 0 näher erläutert. Die Erfindung ist jedoch nicht auf solche Ausführungsformen oder die erläuterten Ausführungsbeispiele beschränkt, sondern ist von grundlegenderer Natur, sodass sie auf sämtliche Kollektormodule im Sinne der Erfindung angewendet werden kann, wobei ein (Solar-)Kollektor wenigstens ein Kollektormodul 0 mit wenigstens einer thermischen Kollektoreinheit, wie z. B. einer Vakuumröhre 10, aufweist. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

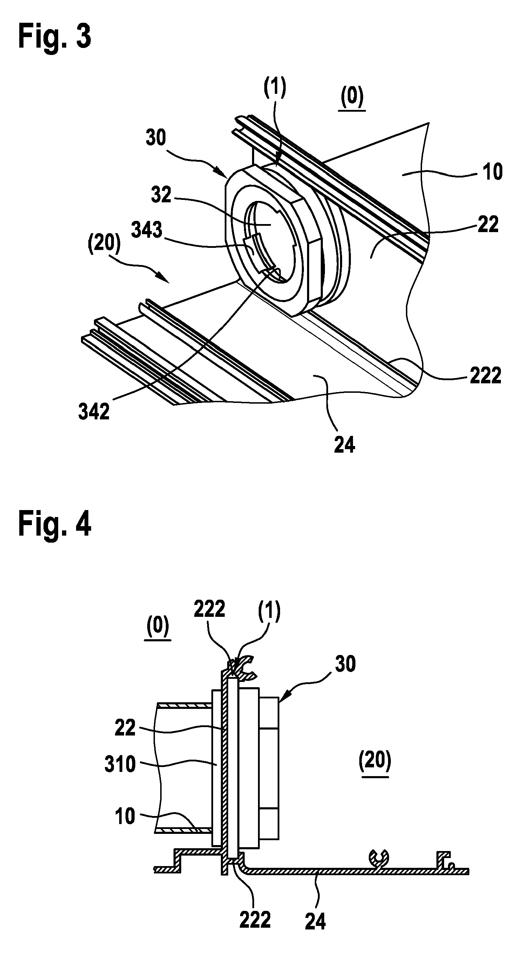

Von der erfindungsgemäßen Röhrenfixierung 30 sind vorliegend zwei Ausführungsformen dargestellt. Zunächst die, welche eine von der Röhrenfixierung 30 separate Dichtung 310, bevorzugt aus einem Gummi, aufweist und eine mittels dieser Röhrenfixierung 30 lagerbare Vakuumröhre 10 zusammen mit der Röhrenfixierung 30 thermisch gegenüber einem Halter 22 isoliert (vgl. die Fig. 2, 4, 6, 13 und 15). Hierbei kann die Dichtung 310 in der Röhrenfixierung 30 vormontiert, z. B. eingesteckt, eingeklebt etc. oder auf einem Längsendabschnitt der Vakuumröhre 10 vormontiert sein. In der zweiten Ausführungsform umfasst die Röhrenfixierung 30 einen Isolierbereich 310, welcher die Röhrenfixierung 30 gegenüber dem Halter 22 insbesondere radial lagert und eine mittels der Röhrenfixierung 30 lagerbare Vakuumröhre 10 thermisch gegenüber einem Halter 22 isoliert (vgl. die Fig. 4, 6, 8, 13 und 15). Hierbei kann eine Dichtung 310 im oben genannten Sinn vorgesehen sein. Die Fig. 4, 6, 13 und 15 repräsentieren dabei beide Ausführungsformen der Röhrenfixierung 30 mit separater Dichtung 310 bzw. der Röhrenfixierung 30 inkl. Isolierbereich 310. In ersten Fall handelt es sich bevorzugt um zwei und in zweitem Fall bevorzugt um ein einziges Teil.

Die Fig. 1 bis 6 zeigen eine wesentliche Ausgestaltung der Röhrenfixierung 30 sowie die wesentlichen Schritte einer Montage der Vakuumröhre 10 am/im Kollektormodul 0 mittels der erfindungsgemäßen Röhrenhalterung 1. Hierbei wird zunächst ein Längsendabschnitt der Vakuumröhre 10 an/in einem Halter 22 gelagert (Fig. 1 und 2). Hierfür weist der Halter 22 eine Montageausnehmung 23 bevorzugt in Form einer Durchgangsausnehmung 23 auf. Eine mehr oder weniger geschlossene Randausnehmung des Halters 22 ist natürlich anwendbar. Hierbei kann, falls vorhanden, die Dichtung 310 bei der Montage am/im Halter 22 schon auf dem Längsendabschnitt der Vakuumröhre 10 oder an/in der Ausnehmung 23 vorgesehen sein. Alternativ kann die Dichtung 310 nach der Montage des Längsendabschnitts der Vakuumröhre 10 an/in dem Halter 22 auf den Längsendabschnitt der Vakuumröhre 10 aufgeschoben werden oder die Dichtung 310 wird zusammen mit der Röhrenfixierung 30 montiert.

Der Halter 22 ist dabei bevorzugt ein Bestandteil oder eine Wandung eines Sammelkastens 20 bzw. eines Gehäuses 20, insbesondere für wenigstens ein Sammelrohr 42 (siehe Fig. 14 und 15), des Kollektormoduls 0. Hierbei kann der Halter 22 Bestandteil eines Montagerahmens des Kollektormoduls 0 sein. Ferner weist der Sammelkasten 20 bzw. das Gehäuse 20 bevorzugt senkrecht zum Halter 22 einen Träger 24 auf, wobei ein vom Halter 22 und Träger 22 aufgespannter langgestreckter, angenäherter Quader von einem Deckel 26 oder einer Blende 26 (siehe Fig. 13) verschließbar ist. Vorliegend dient der Sammelkasten 20 bzw. das Gehäuse 20 einer Aufnahme der Röhrenhalterungen 1 sowie bevorzugt zweier Sammelrohre 42 (siehe Fig. 14 und 15).

In einem zeitlichen Anschluss (siehe Fig. 3 bis 6) an eine Vormontage der Vakuumröhre 10 am/im Halter 22 wird die Röhrenfixierung 30 an/auf den Längsendabschnitt der Vakuumröhre 10 im Bereich des Halters 22 geschoben. Hierbei weist die Röhrenfixierung 30 in ihrem axialen Mittenbereich eine Hindurchführung 32 bzw. eine Durchgangsausnehmung 32 auf, damit die Röhrenfixierung 30 über ein aus der Vakuumröhre 10 herausstehendes Leitrohr 12 (siehe Fig. 15) montiert werden kann. In einem zeitlichen Anschluss wird ein Sammelrohrhalter 40 bzw. eine Sammelrohrführung 40 an/in der Röhrenfixierung 30 montiert und die Röhrenfixierung 30 am Halter 22 festgelegt bzw. montiert. Hierbei kann die Dichtung 310 durch den Isolierbereich 310 der Röhrenfixierung 30 ersetzt sein oder trotz des Isolierbereichs 310 vorgesehen sein. Die Dichtung 310 und/oder der Isolierbereich 310 dienen einer thermischen Isolierung und/oder einer Abdichtung gegen Wasser. Bei der Montage der Röhrenfixierung 30 auf dem Längsendabschnitt der Vakuumröhre 10 kann die Röhrenfixierung 30 zwischen der Vakuumröhre 10 und dem Halter 22 vorgesehen werden.

Die Fig. 7 zeigt eine Ausführungsform des erfindungsgemäßen Sammelrohrhalters 40, wobei an einem Grundkörper 410 des Sammelrohrhalters 40 eine Klammer 400 zur Aufnahme eines Sammelrohrs 42 bzw. eine Registerklammer 400 zur Aufnahme einer Mehrzahl von Sammelrohren 42 vorgesehen ist. Der Grundkörper 410 weist ferner eine Durchführung 412 für das Leitrohr 12 der Vakuumröhre 10 auf. Hierbei können einander gegenüberliegend zwei Durchführungen 412 im Grundkörper 410 eingerichtet sein, je nachdem ob das Leitrohr 12 einem Vorlauf oder einem Rücklauf des Kollektormoduls 0 zugehörig ist. Des Weiteren umfasst der Sammelrohrhalter 40 eine am Leitrohr 12 arretierbare oder festlegbare Verdrehsicherung 413 sowie für seine Montage an/in der Röhrenfixierung 30 eine Arretierlasche 442. Die Verdrehsicherung 413 kann z. B. als eine Klammer ausgebildet sein, die das Leitrohr 12 z. B. an zwei Seiten umgreifen kann. Die Arretierlasche 442 ist bevorzugt eine Vorrichtung 442 für einen Bajonettverschluss. Korrespondierend bzw. komplementär zur Arretierlasche 442 weist die Röhrenfixierung 30 eine Hinterschneidung 342 (innere Umfangsnut, innerer Bund (ggf. zusammen mit Stirnseite der Vakuumröhre 10 oder der Dichtung 310)) oder eine Rasteinrichtung auf (Fig. 8).

Die Fig. 8 zeigt eine Ausführungsform der erfindungsgemäßen Röhrenfixierung 30 mit Isolierbereich 310. Ausgehend von einer vorderen Stirnseite der Röhrenfixierung 30, also derjenigen Seite der Röhrenfixierung 30, welche in einer auf die Vakuumröhre 10 aufgesteckten Position am nächsten in Bezug auf ein Sammelrohr 42 liegt, weist die Röhrenfixierung 30 in ihrer Axialrichtung (auch Axialrichtung der Vakuumröhre 10) nach hinten zunächst einen optionalen Kodierabschnitt 340, einen optionalen Übergangsabschnitt 330, einen Montageabschnitt 320 und den ggf. optionalen Isolierbereich 310 auf. Ein Montagebereich 350 für den Sammelrohrhalter 40 kann am/im Kodierabschnitt 340, am/im Übergangsabschnitt 330 und/oder am/im Montageabschnitt 320 eingerichtet sein. Bei der Montage des Sammelrohrhalters 40 an/in der Röhrenfixierung 30 schließt der Sammelrohrhalter 40 die Hindurchführung 32 in der Röhrenfixierung 30.

Der Montageabschnitt 320 der Röhrenfixierung 30 (siehe auch die Fig. 9 bis 12) weist wenigstens eine, bevorzugt jedoch eine Mehrzahl von, insbesondere zwei, Montageeinrichtungen 322 zur Arretierung, Fixierung, Festlegung und/oder Montage der Röhrenfixierung 30 am/im Halter 22 auf, wodurch die Vakuumröhre 10 ebenfalls am/im Halter 22 arretiert, fixiert, festgelegt bzw. montiert wird. Der Montageabschnitt 320 umfasst neben einem bevorzugt im Wesentlichen wenigstens abschnittsweise hohlzylinderförmigen Grundkörper 327 bevorzugt eine erste Montagevorrichtung 324, bevorzugt eine Federvorrichtung 325 und/oder bevorzugt eine zweite Montagevorrichtung 326.

Die erste Montagevorrichtung 324 ist z. B. als Montageanschlag 324, bevorzugt als Radialvorsprung 324, der Montageeinrichtung 322 ausgebildet und dient einer Arretierung der Röhrenfixierung 30 für eine Vormontageposition V2 der Röhrenfixierung 30 (siehe unten, Fig. 10 und 11). Die zweite Montagevorrichtung 326 ist z. B. als Verdrehsicherung 326 der Montageeinrichtung 322 ausgebildet und dient einer Festlegung bzw. Montage der Röhrenfixierung 30 für eine Montageposition M3 der Röhrenfixierung 30 (siehe unten, Fig. 12). Hierfür kann die Verdrehsicherung 326 einen bevorzugt tangentialen und/oder geraden Außenbund/ -bereich aufweisen, der in Komplementarität zu einem Abschnitt (siehe unten, Hinterschneidung 222) des Halters 22 bringbar ist.

Anhand der Fig. 9 bis 12 ist im Folgenden eine Montage der Vakuumröhre 10 mittels der Röhrenfixierung 30 am/im Halter 22 näher erläutert. Beispielhaft weist die Röhrenfixierung 30 dabei zwei um im Wesentlichen 180° versetzt angeordnete Montageeinrichtungen 322 am Montageabschnitt 320 auf. Hierbei ist die eine Montageeinrichtung 32 mittels einer Drehung der Röhrenfixierung 30 um 180° in die andere Montageeinrichtung 32 überführbar (180°-Drehsymmetrie). Eine einzelne Montageeinrichtung 322 gliedert sich, wie oben geschildert, in den über die Federvorrichtung 325 federnd gelagerten Montageanschlag 324 und die Verdrehsicherung 326. Für eine bessere Montage kann in Drehrichtung vor der ersten Federvorrichtung 325 eine Rampe 321 des Montageabschnitts 320 als ein Einfädelabschnitt 321 für die Montageeinrichtung 322 dienen. Die jeweilige Montageeinrichtung 322 inkl. Einfädelabschnitt 312 deckt vorliegend 90° oder weniger an einem Außenumfang des Montageabschnitts 320 ab. Mehr als 90° sind bei zwei Montageeinrichtungen 322 jedoch anwendbar.

Zunächst wird in einem ersten Schritt, siehe Fig. 9, die Röhrenfixierung 30 axial in Richtung der Vakuumröhre 10 auf dem Längsendabschnitt der Vakuumröhre 10 und ggf. auch in der Ausnehmung 23 des Halters 22 montiert (Steckposition S1). Es ist hierbei nicht unbedingt notwendig, dass die Röhrenfixierung 30 auch in der Ausnehmung 23 des Halters 22 montiert wird, es genügt, die Röhrenfixierung 30 auf der Vakuumröhre 10 vorzusehen und ihren Längsendabschnitt in sich aufzunehmen. Hierbei greift die Montageeinrichtung 322 nicht in eine Hinterschneidung 222 des Halters 22 ein, welche in den Fig. 1 bis 6 und 13 bis 15 gut zu erkennen ist. Hierbei weist der Halter 22 oben und unten, jeweils eine z. B. auch als eine Rasteinrichtung 222 oder Nut 222 bezeichenbare Hinterschneidung 222 auf, wobei sich die offenen Seiten der Hinterschneidungen 222 einander gegenüberliegen. Zwei einander gegenüberliegende Freischnitte 343 (siehe auch Fig. 8) an der Hindurchführung 32 für einen Zugang des Sammelrohrhalters 40 zur Hinterschneidung 342 sind dabei in einer -45°-Stellung.

In einem zeitlichen Anschluss daran wird in einem zweiten Schritt die Röhrenfixierung 30 um ca. 45° am/im Halter 22 verdreht, dessen gedrehte Position in der Fig. 10 dargestellt ist (Vormontageposition V2 bzw. erste Drehposition V2). Hierbei wird die Röhrenfixierung 30 in Umfangsrichtung verdreht bis der Montageanschlag 324 oben, d. h. in einer 0°-Stellung ist, wobei die Federvorrichtung 325 einfedern kann. Die Montageanschläge 324 sind nun in Funktion und greifen in die Hinterschneidungen 222 ein. Hierbei greift ein Rand (der Montageeinrichtung 322 bzw. des Montageanschlags 324) der Röhrenfixierung 30 in die Hinterschneidungen 222 des Halters 22 ein. Eine axiale Demontage ist nun nicht mehr möglich. Die Freischnitte 343 für den Sammelrohrhalter 40 sind nun senkrecht angeordnet, d. h. einer 0°-Stellung.

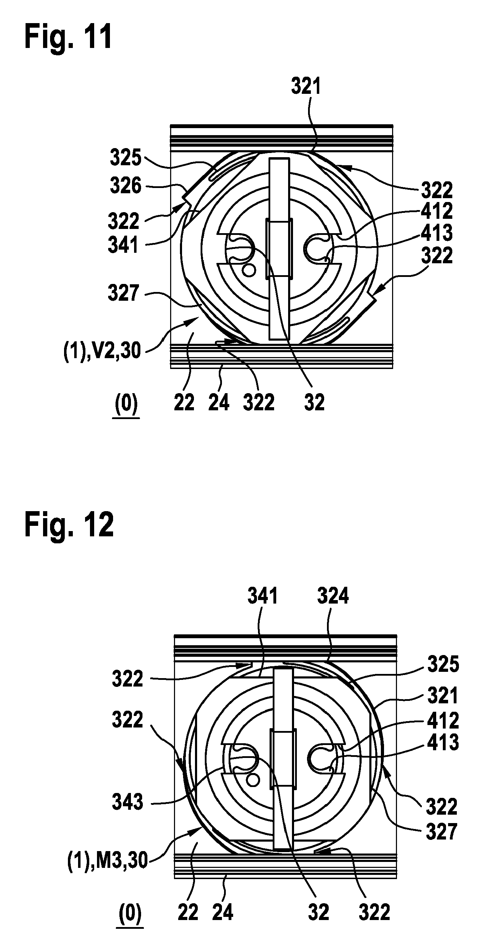

In einem zeitlichen Anschluss daran wird in einem dritten Schritt der Sammelrohrhalter 40 an/in einem Montagebereich 350 der Röhrenfixierung 30 vormontiert, was in der Fig. 11 dargestellt ist (weiterhin Vormontageposition V2 bzw. erste Drehposition V2). Hierbei wird der Sammelrohrhalter 40 axial in die Röhrenfixierung 30 eingeführt bzw. eingesteckt, wofür eine entsprechende Geometrie des Sammelrohrhalters 40 in eine korrespondierende bzw. komplementäre Geometrie der Röhrenfixierung 30 eingreift (bevorzugt Bajonettverschluss). Hierbei befindet sich der Sammelrohrhalter 40 bzw. dessen Klammer 400 in einer senkrechten Position, d. h. in seiner 0°-Stellung. Hierbei ist der Sammelrohrhalter 40 für ein Sammelrohr 42 seitlich offen. - Ein Sammelrohr 42 bzw. ein Sammelrohrregister 42, 42 ist in den Fig. 11 und 12 nicht dargestellt.

In einem zeitlichen Anschluss daran wird in einem vierten Schritt die Röhrenfixierung 30 nochmals um ca. 45° am/im Halter 22 verdreht, dessen gedrehte Position (+45°-Stellung) in der Fig. 12 dargestellt ist (Montageposition M3 bzw. zweite Drehposition M3). Die Verdrehsicherungen 326 sind nun in Funktion und greifen in die Hinterschneidungen 222 ein. Ein Weiterdrehen der Röhrenfixierung 30 ist aufgrund einer Geometrie der Verdrehsicherungen 326 und einer Geometrie der Hinterschneidungen 222 nicht möglich. Hierbei verbleibt der Sammelrohrhalter 40 in seiner 0°-Stellung, was z. B. mittels der Verdrehsicherung 413 erfolgen kann, die sich an dem Leitrohr 12 der Vakuumröhre 10 abstützen kann. Hierdurch ist der Sammelrohrhalter 40 in axialer Richtung fixiert. Ferner ist mittels der Verdrehsicherung 413 ein selbständiges Drehen des Sammelrohrhalters 40 verhindert. Die Röhrenfixierung 30 und der Sammelrohrhalter 40 sind nun vollständig montiert und die Vakuumröhre 10 ist axial und radial gesichert.

Die Fig. 13 zeigt eine Kodierung für den Deckel 26 bzw. die Blende 26 des Gehäuses 20. Hierfür weist der Deckel 26 (Blende 26) innen eine Kodiereinrichtung 261 auf, welche z. B. als eine Sicherungslasche 261 ausgebildet sein kann. Ferner weist die Röhrenfixierung 30 eine Kodiereinrichtung 341, insbesondere am Kodierabschnitt 340 auf, wobei die Kodiereinrichtung 341 z. B. eine Weg- oder Ausnehmung am Kodierabschnitt 340 oder des Kodierabschnitts 340 sein kann. Eine Funktion der beiden Kodiereinrichtungen 261, 341 ist im Folgenden kurz erläutert. Wenn die Röhrenfixierung 10 in ihrer Vormontageposition V2 (Fig. 11) verbleibt, ist die Montage des Deckels 26 nicht möglich. Somit ist eine Fehlmontage der Röhrenfixierung 10 ausgeschlossen. D. h. die Kodiereinrichtung 261 des Deckels 26 kollidiert mit dem Kodierabschnitt 340 abseits dessen Kodiereinrichtung 341. Der Deckel 26 kann nur dann geschlossen werden, wenn die Kodiereinrichtung 261 in den Bereich der Kodiereinrichtung 341 eindringen kann (Fig. 12, 13).

### Bezugszeichenliste

- 0: (thermisches) (Vakuumröhren-)Kollektormodul, Solarmodul für einen (Vakuumröhren-)Kollektor einer (Vakuumröhren-)Kollektoranlage, (Solar-)Kollektor
- 1: (Vakuum-)Röhrenhalterung des Kollektormoduls 0

- 10: (Vakuum-)Röhre des Kollektormoduls 0
- 12: Leitrohr der Vakuumröhre 10 (Absorber nicht dargestellt)
- 20: Gehäuse für Sammelrohr(e) 42, Sammelkasten, ggf. inkl. Montagerahmen des Kollektormoduls 0
- 22: Halter, Halterblech des Gehäuses 20, bevorzugt aus Aluminium oder Kunststoff
- 23: (Montage-)Ausnehmung, Durchgangsausnehmung, Randausnehmung im Halter 22
- 24: Träger, Trägerblech des Gehäuses 20, bevorzugt aus Aluminium oder Kunststoff
- 26: Deckel, Blende des Gehäuses 20, bevorzugt aus Aluminium oder Kunststoff
- 30: (Universal-)Röhrenfixierung, insbesondere einstückig, stofflich einstückig, integral ausgebildet
- 32: Hindurchführung, Durchgangsausnehmung für Durchführung des Leitrohrs 12
- 40: Sammelrohrhalter/-führung, insbesondere einstückig, stofflich einstückig, integral ausgebildet
- 42: Sammelrohr, insbesondere einstückig, stofflich einstückig, integral ausgebildet

- 222: Hinterschneidung, Rasteinrichtung, Nut des Halters 22 für Montage der Röhrenfixierung 30 am/im Halter 22, insbesondere zur Aufnahme der Montageeinrichtung 322, d. h. insbesondere zunächst der ersten Montagevorrichtung 324 und dann erst der zweiten Montagevorrichtung 326
- 261: Kodiereinrichtung, insbesondere Sicherungslasche, am Deckel 26, korrespondiert mit Kodierabschnitt 340, ggf. komplementär zur Kodiereinrichtung 341 (Röhrenfixierung in Montageposition M3)
- 310: in die Röhrenfixierung 30 einsetzbare Dichtung, bevorzugt aus Gummi, oder Isolierbereich der Röhrenfixierung 30 gegenüber dem Halter 22, bevorzugt im Wesentlichen beide zumindest abschnittsweise hohlzylinderförmig
- 320: Montageabschnitt der Röhrenfixierung 30 für deren Montage am Halter 22, bevorzugt im Wesentlichen zumindest abschnittsweise hohlzylinderförmig
- 321: Rampe, Einfädelabschnitt für Montageeinrichtung 322
- 322: Montageeinrichtung des Montageabschnitts 320 zur Montage der Röhrenfixierung 30 am/im Halter 22, umfasst ggf. erste Montagevorrichtung 324, Federvorrichtung 325 und/oder zweite Montagevorrichtung 326
- 324: erste Montagevorrichtung, Montageanschlag, bevorzugt Radialvorsprung, der Montageeinrichtung 322, Vormontageposition V2 der Röhrenfixierung 30
- 325: Federvorrichtung(en), bevorzugt Blattfeder(n) der Montageeinrichtung 322 für die erste Montagevorrichtung 324
- 326: zweite Montagevorrichtung, Verdrehsicherung der Montageeinrichtung 322, mit bevorzugt tangentialem und/oder geradem Außenbund/-bereich für Montageposition M3 der Röhrenfixierung 30
- 327: Grundkörper der Montageeinrichtung, bevorzugt im Wesentlichen hohlzylinderförmig
- 330: Übergangsabschnitt der Röhrenfixierung 30 zwischen Montageabschnitt 320 und Kodierabschnitt 340, bevorzugt im Wesentlichen zumindest abschnittsweise hohlzylinderförmig
- 340: Kodierabschnitt der Röhrenfixierung 30
- 341: Kodiereinrichtung des Kodierabschnitts 340
- 342: Hinterschneidung, Rasteinrichtung, innere Umfangsnut, innerer Bund (ggf. zusammen mit Stirnseite der Vakuumröhre 10 oder Dichtung 310) für Montage des Sammelrohrhalters 40 am/im Kodierabschnitt 340, im Übergangsabschnitt 330 und/oder im Montageabschnitt 320
- 343: Freischnitt an Hindurchführung 32 für Zugang des Sammelrohrhalters 40 zur Hinterschneidung 342
- 350: Montagebereich des Kodierabschnitts 340, des Übergangsabschnitts 330 und/oder des Montageabschnitts 320 für Sammelrohrhalter 40
- 400: (Register-)Klammer des Sammelrohrhalters 40
- 410: Grundkörper des Sammelrohrhalters 40
- 412: Durchführung im Sammelrohrhalter 40 für das Leitrohr 12
- 413: Verdrehsicherung des Sammelrohrhalters 40 für Arretierung an/am Leitrohr 12
- 442: Arretierlasche des Sammelrohrhalters 40 für Eingriff in die Hinterschneidung 342

- S1: (ggf. lediglich anfängliche) Steckposition der Röhrenfixierung 30 am/im Halter 22 (S1 => V2)
- V2: Vormontageposition der Röhrenfixierung 30 am/im Halter 22, bevorzugt erste Drehposition der Röhrenfixierung 30 am/im Halter 22, ggf. inkl. Steckposition S1, Steckposition S1 der Röhrenfixierung 30 am/im Halter 22 ist dieser ggf. zeitlich vorausgegangen (V2 => M3)
- M3: (End-)Montageposition der Röhrenfixierung 30 am/im Halter 22, bevorzugt zweite Drehposition der Röhrenfixierung 30 am/im Halter 22, ggf. inkl. Steckposition S1, Steckposition S1 und erste Drehposition V2 der Röhrenfixierung 30 am/im Halter 22 sind dieser ggf. zeitlich vorausgegangen

## Patentansprüche

1. Vakuumröhrenkollektormodul für eine Vakuumröhrenkollektoranlage, mit wenigstens einer Vakuumröhre (10) und einem Halter (22) zum Lagern der wenigstens einen Vakuumröhre (10), **dadurch gekennzeichnet, dass**
die Vakuumröhre (10) am/im Halter (22) gelagert ist, wobei zwischen der Vakuumröhre (10) und dem Halter (22) eine Röhrenfixierung (30) vorgesehen ist, welche die Vakuumröhre (10) am/im Halter (22) lagert.

2. Vakuumröhrenkollektormodul gemäß vorhergehendem Anspruch, **dadurch gekennzeichnet, dass** die Vakuumröhre (10) im Wesentlichen mittels einer axialen Loslagerung an/in einer Ausnehmung (23) des Halters (22) gelagert ist, wobei
die Vakuumröhre (10) bevorzugt durch die Ausnehmung (23) hindurchgesteckt ist, oder die Vakuumröhre (10) bevorzugt in der Ausnehmung (23) aufgenommen ist.

3. Vakuumröhrenkollektormodul gemäß einem der vorhergehenden Ansprüche, **dadurch gekennzeichnet, dass**:
• in der Röhrenfixierung (30) eine Dichtung (310) vorsehbar ist, mittels welcher die Vakuumröhre (10) gegenüber dem Halter (22) im Wesentlichen thermisch und/oder gegen eindringen von Wasser isolierbar oder isoliert ist;
• die Röhrenfixierung (30) einen Isolierbereich (310) aufweist, mittels welchem die Vakuumröhre (10) gegenüber dem Halter (22) im Wesentlichen thermisch isolierbar oder isoliert ist;
• die Röhrenfixierung (30) einen Montageabschnitt (320) aufweist, mittels welchem die Röhrenfixierung (30) am Halter (22) fixierbar und somit die Vakuumröhre (10) am/im Halter (22) lagerbar oder gelagert ist;
• die Röhrenfixierung (30) einen Kodierabschnitt (340) oder eine Kodiereinrichtung (341) aufweist, welcher bzw. welche lediglich bei ordnungsgemäßer Montage der Röhrenfixierung (30) ein Schließen eines Deckels (26) des Vakuumröhrenkollektormoduls (0) ermöglicht; und/oder
• die Röhrenfixierung (30) insbesondere am/im Kodierabschnitt (340) einen Montagebereich (350) aufweist, an/in welchem ein Sammelrohrhalter (40) montierbar oder montiert ist.

4. Vakuumröhrenkollektormodul gemäß einem der vorhergehenden Ansprüche, **dadurch gekennzeichnet, dass** für eine oder bei einer Montage der Röhrenfixierung (30) am/im Vakuumröhrenkollektormodul (0):
• die Röhrenfixierung (30) zunächst in eine Steckposition (S1) an/in der Ausnehmung (23) am/im Halter (22) auf der Vakuumröhre (10) verbringbar ist oder verbracht wird;
• in der Steckposition (S1) die Dichtung (310) mit der darin befindlichen Vakuumröhre (10) oder die Vakuumröhre (10) selbst in der Röhrenfixierung (30) aufnehmbar ist oder aufgenommen wird;
• in einem zeitlichen Anschluss daran die Röhrenfixierung (30) aus der Steckposition (S1) in eine Vormontageposition (V2) verbringbar ist oder verbracht wird;
• in der Vormontageposition (V2) der Sammelrohrhalter (40) an/in der Röhrenfixierung (30) vorsehbar ist oder vorgesehen wird;
• in der Vormontageposition (V2) ggf. wenigstens ein Sammelrohr (42) am/im Sammelrohrhalter (40) montierbar, insbesondere verrastbar, ist oder montiert, insbesondere verrastet, wird;
• in einem zeitlichen Anschluss daran die Röhrenfixierung (30) aus der Vormontageposition (V2) in eine Montageposition (M3) verbringbar ist oder verbracht wird; und/oder
• ggf. in einem zeitlichen Anschluss daran wenigstes ein Sammelrohr (42) am/ im Sammelrohrhalter (40) montierbar, insbesondere verrastbar, ist oder montiert, insbesondere verrastet, wird.

5. Vakuumröhrenkollektormodul gemäß einem der vorhergehenden Ansprüche, **dadurch gekennzeichnet, dass** der Montageabschnitt (320) eine Montageeinrichtung (322) für eine Montage, insbesondere eine schrittweise Montage, der Röhrenfixierung (30) am/im Halter (22) aufweist, wobei
die Montageeinrichtung (322) am/im Halter (22) festlegbar ist, und die Montageeinrichtung (322) insbesondere derart ausgestaltet ausgebildet ist, dass die Montageeinrichtung (322) an/in einer Hinterschneidung (222) des Halters (22) arretierbar ist.

6. Vakuumröhrenkollektormodul gemäß einem der vorhergehenden Ansprüche, **dadurch gekennzeichnet, dass** der Montageabschnitt (320) eine erste Montagevorrichtung (324) für die Vormontageposition (V2) der Röhrenfixierung (30) am/im Halter (22) und eine zweite Montagevorrichtung (326) für die Montageposition (M3) der Röhrenfixierung (30) am/im Halter (22) aufweist, wobei
die erste Montagevorrichtung (324) bevorzugt federnd in der Montageeinrichtung (322) eingerichtet ist, und wenigstens einer der zwei, insbesondere beide, Umfangsendabschnitte der ersten Montagevorrichtung (324) insbesondere als Federn, bevorzugt als Blattfedern, einer Federvorrichtung (325) der Montageeinrichtung (222) ausgebildet ist.

7. Vakuumröhrenkollektormodul gemäß einem der vorhergehenden Ansprüche, **dadurch gekennzeichnet, dass** die erste Montagevorrichtung (324) als ein Montageanschlag (324) der Röhrenfixierung (30) und die zweite Montagevorrichtung (326) als eine Verdrehsicherung (326) der Röhrenfixierung (30) ausgebildet ist, wobei
bevorzugt durch eine Drehung, insbesondere eine im Wesentlichen 45°- oder 90°-Drehung, zeitlich zunächst der Montageanschlag (324) und in einem zeitlichen Anschluss daran bevorzugt durch eine weitere Drehung, insbesondere eine im Wesentlichen 45°- oder 90°-Drehung, die Verdrehsicherung (326) in Eingriff mit der Hinterschneidung (222) des Halters (22) bringbar ist oder gebracht ist/wird.

8. Vakuumröhrenkollektormodul gemäß einem der vorhergehenden Ansprüche, **dadurch gekennzeichnet, dass** der Sammelrohrhalter (40) mittels eines Bajonettverschlusses an/in der Röhrenfixierung (30) montierbar ist, wobei für ein Einrichten des Bajonettverschlusses bevorzugt der Sammelrohrhalter (40) festhalterbar ist oder festgehalten wird, und die Röhrenfixierung (30) diesbezüglich verdrehbar ist oder verdreht wird, und
der Sammelrohrhalter (40) bevorzugt eine Verdrehsicherung (413) aufweist, mittels welcher der Sammelrohrhalter (40) an einem Leitrohr (12) der Vakuumröhre (10) halterbar ist oder gehalten wird, und der Sammelrohrhalter (40) für das Einrichten des Bajonettverschlusses bevorzugt eine Arretierlasche (442) aufweist, welche in eine Hinterschneidung (342) der Röhrenfixierung (30) eingreifbar ist oder eingreift.

9. Vakuumröhrenkollektormodul gemäß einem der vorhergehenden Ansprüche, **dadurch gekennzeichnet, dass**:
• ein Sammelkasten (20) und/oder wenigstens ein Sammelrohr (42) des Vakuumröhrenkollektormoduls (0) an einer Unterseite des Vakuumröhrenkollektormoduls (0) vorgesehen ist;
• die Ausnehmung (23) als eine Durchgangsausnehmung (23) im oder eine Randausnehmung (23) am Halter (22) ausgebildet ist;
• die Röhrenfixierung (30) als eine Universal-Röhrenfixierung (30) ausgebildet ist, mittels welcher im Wesentlichen sämtliche Vakuumröhren (10) des Kollektormoduls (0) lagerbar oder gelagert sind;
• die Dichtung (310) separat von der Röhrenfixierung (30) ausgebildet ist, wobei die Dichtung (310) bevorzugt einen Gummi aufweist;
• die Kodiereinrichtung (341) derart ausgebildet ist, dass ein Deckel (26) des Sammelkastens (20) nur dann vollständig schließbar oder geschlossen ist, wenn die Röhrenfixierung (30) korrekt montiert ist;
• die Verdrehsicherung (326) mittels einer an ihr ausgebildeten Fläche an einer Fläche in der Hinterschneidung (222) des Halters (22) eng oder komplementär anlegbar ist oder anliegt; und/oder
• der Sammelrohrhalter (40) eine Klammer (400) oder eine Registerklammer (400) zur Halterung wenigstens eines Sammelrohrs (42) aufweist;

10. Verfahren zum Montieren wenigstens einer Vakuumröhre (10) an/in einem Halter (22) bevorzugt eines Vakuumröhrenkollektormoduls (0) für eine Vakuumröhrenkollektoranlage, wobei
eine Röhrenfixierung (30) für die Vakuumröhre (10) zunächst in eine Steckposition (S1) am/im Halter (22) auf der Vakuumröhre (10) verbracht wird, wobei mittels der Röhrenfixierung (30) ein Endabschnitt der Vakuumröhre (10) an/in der Röhrenfixierung (30) aufgenommen wird, und
die Röhrenfixierung (30) aus der Steckposition (S1) in eine Montageposition (M3) der Röhrenfixierung (30) am/im Halter (22) verbracht wird, durch welche die Röhrenfixierung (30) am/im Halter (22) festgelegt wird.

11. Verfahren gemäß vorhergehendem Anspruch, **dadurch gekennzeichnet, dass** die Röhrenfixierung (30) aus der Steckposition (S1) in eine Vormontageposition (V2) am/im Halter (22) verbracht wird, wobei
in der Vormontageposition (V2) ein Sammelrohrhalter (40) an/in der Röhrenfixierung (30) vorgesehen wird, und ggf. ein Sammelrohr (42) am/im Sammelrohrhalter (40) montiert, insbesondere verrastet, wird, und/oder
die Röhrenfixierung (30) aus der Vormontageposition (V2) in die Montageposition (M3) verbracht wird, und ggf. ein Sammelrohr (42) am/im Sammelrohrhalter (40) montiert, insbesondere verrastet, wird.

12. Verfahren gemäß einem der vorhergehenden Ansprüche, **dadurch gekennzeichnet, dass**:
• zeitlich vor dem Vorsehen der Röhrenfixierung (30) am/im Halter (22) die Vakuumröhre (10) zusammen mit einer auf ihr vorgesehenen Dichtung (310) am/im Halter (22) vorgesehen wird;
• die Röhrenfixierung (30) durch ein Verdrehen, insbesondere ein Verdrehen von im Wesentlichen 90° oder 180°, aus der Steckposition (S1) in die Montageposition (M3) verbracht wird;
• die Röhrenfixierung (30) durch ein Verdrehen, insbesondere ein Verdrehen von im Wesentlichen 45°- oder 90°, aus der Steckposition (S1) in die Vormontageposition (V2) verbracht wird;
• die Röhrenfixierung (30) durch ein Verdrehen, insbesondere ein Verdrehen von im Wesentlichen 45°- oder 90°, aus der Vormontageposition (V2) in die Montageposition (M3) verbracht wird;
• beim Verbringen oder Verdrehen der Röhrenfixierung (30) in die Vormontageposition (V2) und/oder die Montageposition (M3) eine Montageeinrichtung (322) der Röhrenfixierung (30) in den Halter (22) eingreift; und/oder
• die Röhrenfixierung (30) und/oder das Vakuumröhrenkollektormodul (0) gemäß einem der vorhergehenden Ansprüche ausgebildet ist.

13. Vakuumröhrenkollektor, Vakuumröhrenkollektoranlage oder Thermosystem zur Wärmeerzeugung, z. B. für eine Warmwasserbereitung und/oder eine Heizungsunterstützung, **dadurch gekennzeichnet, dass**
der Vakuumröhrenkollektor, die Vakuumröhrenkollektoranlage oder das Thermosystem ein Vakuumröhrenkollektormodul (0) gemäß einem der vorhergehenden Ansprüche aufweist, und/oder
eine Vakuumröhre (10) des Vakuumröhrenkollektors, der Vakuumröhrenkollektoranlage oder des Thermosystems gemäß einem der vorhergehenden Ansprüche montiert ist oder montiert wird.
